# EUROPEAN PATENT APPLICATION

(11) **EP 1 335 513 A1**
(43) Date of publication of application: **13.08.2003**
(21) Application number: 03002312.1
(22) Date of filing: 14.09.1998
(51) Int. Cl.: H04H 1/00

(54) **Method for transferring encrypted information**

(30) Priority: 17.09.1997 SE 9703345
(62) Divisional of application: 98944390.8
(71) Applicant: Teracom AB, 118 92 Stockholm (SE)
(72) Inventor: Rebhan, Richard, 11333 Stockholm (SE); Karlsson, Pierre, 14137 Huddinge (SE); Ruottinen, Per, 17676 Järfälla (SE); Ossfeldt, Jan, 13549 Tyresö (SE); Pohjanvuori, Timo, 43650 Hoväs (SE)
(74) Representative: Cederbom, Hans Erik August

(57) **Abstract**

A method for transferring information from an information provider (100) to an information consumer (190) in a secure manner by means of a digital broadcasting (140) system and a secondary bidirectional transfer network (130). The secondary bidirectional transfer network is used for transfer of crypto keys to the information consumer. The secondary bidirectional transfer network can also be used to provide the information consumer with checksums and provide a means for the information consumer to request resending of corrupted transferred information.

## Description

### FIELD OF THE INVENTION

The present invention relates generally to a method of information transfer, for example an electronic map, multimedia applications or the like, with one or more radiofrequency receivers such as mobile, portable, and stationary radiofrequency receivers, especially to a single predetermined digital broadcasting receiver.

### BACKGROUND TO THE INVENTION

There exists a number of different methods of transferring information from an information/content provider to an information consumer, i.e. to the destination where the information/content is intended to be used. In order to transfer information to an information consumer there must be some means for localizing the information consumer, which in some circumstances can be a problem. If the information consumer is stationary then the problem might arise the first time an information transfer is to take place. On the other hand if the information consumer is mobile, then, depending on the method of transfer, the information consumer might have to be localized anew for each information transfer that is to take place. Another problem is how to transfer the information in an effective manner, both from an economic as well as from a time point of view, the information is perhaps no good tomorrow and it must be affordable to get it.

A mobile telephone system is an information transfer system. Voice information in the form of digital information and also possibly pure digital data. A mobile telephone system addresses the previously mentioned problems in a manner intended to be efficient mainly for speech. A mobile telephone system, GSM (Global System for Mobile communication) for example, is a two-way communications system that uses cells in which transfer of information between the mobile telephone and a base station occur. As long as a mobile telephone is powered up (and even when on-hook) an intermittent exchange of information between the mobile phone and the base station of a cell in question takes place. The information exchange that takes place when the mobile phone is on-hook is, among other things, used for keeping track of the mobile phone. The base station in question passes this information on to a central database that the mobile telephone operator maintains to keep track of where all the mobile telephones are located, i.e. in what cell they are for the moment. When a request to establish contact with the mobile phone is made then an inquiry to the central database is made to find out in which cell the mobile phone is located so that the call can be directed to the appropriate base station for a subsequent correct radio communication setup.

A DAB (Digital Audio Broadcast) and other digital broadcasting systems can have a similar cell structure as a mobile telephone system has, but DAB is a one-way broadcasting system, i.e. there is no way a DAB receiver can communicate with a DAB transmitter within the DAB system. The local DAB transmitter does not know which DAB receivers are tuned in or can receive the transmitter or if any DAB receiver at all can or is receiving for that matter. Transfer of information to a DAB receiver would therefore involve transmitting this information across all cells that the DAB receiver might be located in, which usually means the whole DAB network and possibly over all different frequencies.

A DAB receiver can determine its own location by using the unique TII (Transmitter Identification Information) that each DAB transmitter adds to the DAB frames. This means that a DAB receiver can distinguish locally valid information from information concerning other transmitter regions. Other digital broadcasting systems use equivalent methods. This seems to be an improvement in the DAB system, especially in SFNs (Single Frequency Networks) and is described in US 5 493 709. US 5 493 709 describes how local information is transmitted in the complete DAB network to thereby be selectively filtered in the DAB receivers. This method will relieve a listener/user of information which does not concern the area in which the DAB receiver is located at the moment. Unfortunately it could be argued that the described method does not use the DAB broadcasting system in a very effective manner since system bandwidth in the whole system is used for information transfer of information which only has any value in a very limited area.

There seems to be no manner in which to transfer information in a digital broadcasting system to a predetermined single digital broadcasting receiver without having to download the whole system with the information, and especially not how to transfer this information in a secure manner.

### SUMMARY OF THE INVENTION

An object of the invention is to define a method for providing a secure manner of transferring information via a digital broadcasting system to one or more predetermined information consumers.

Another object of the invention is to define a method which is able to transfer information in a digital broadcasting system in a safe and error tolerant manner.

The above-mentioned objects are achieved in accordance with the invention by a method for transferring information from an information provider to an information consumer in a secure manner by means of a digital broadcasting system and a secondary bidirectional transfer network. The secondary bidirectional transfer network is used for transfer of crypto keys to the information consumer. The secondary bidirectional transfer network can also be used to provide the information consumer with checksums and provide a means for the information consumer to request resending of corrupted transferred information.

The aforementioned objects can also achieved according to the invention by a method for transferring information from an information provider to a predetermined information consumer. The information is transferred by means of a digital broadcasting system to a digital broadcasting receiver of the information consumer. To enable a secure information transfer when a demand to transfer information to the information consumer is originated by the information provider the information transfer is supported by a secondary bidirectional transfer network such as NMT (Nordic Mobile Telephone), GSM (Global System for Mobile telephones), PSTN (Public Switched Telephone Network), Internet, or the like. The method according to the invention comprises a number of steps. In a first step the information provider establishes contact with an information transfer point for requesting transfer of information to the information consumer. The information transfer point can be part of the information provider, part of the digital broadcasting system, or a separate service. Thereafter in a second step the information transfer point transfers a crypto key to the information consumer by means of the secondary bidirectional transfer network before, during or after transferring information over the digital broadcasting system. In a third step the information to be transferred is encoded either by the information provider or by the information transfer point. In a fourth step the encoded information is transferred over the digital broadcasting system to the digital broadcasting receiver of the information consumer. And finally in a fifth step the transferred information is decoded by means of the transferred crypto key either in the digital broadcasting receiver of the information consumer or by the information consumer.

Suitably the information transfer point determines when and with what channel the information transfer is to take place and by means of the secondary bidirectional transfer network notifies the information consumer of when and with what channel the information transfer is to take place.

In some versions of the method according to the invention in the step of transferring a crypto key to the information consumer via the secondary bidirectional transfer network, suitably a broadcast over the digital broadcasting system is first performed to alert the information consumer to establish contact with the information transfer point.

In other versions of the method according to the invention if the step of transferring a crypto key to the information consumer via the secondary bidirectional transfer network cannot be concluded then suitably a broadcast over the digital broadcasting system is performed to alert the information consumer to establish contact with the information transfer point. Then suitably if the information transfer point after a timeout has not been able to establish contact with the information consumer then the information provider is notified that the information consumer cannot be positively contacted.

When a high reliability of the transfer of the information is necessary the method according to the invention further comprises the following steps. First transferring checksums or the like, of the information that has or will be transferred via the digital broadcasting system, via the secondary bidirectional transfer network to the information consumer. Secondly checking the transferred information if it is uncorrupted based on the transferred checksums or the like. Checking is performed in the digital broadcasting receiver of the information consumer or by the information consumer. Thirdly the digital broadcasting receiver of the information consumer or the information consumer requesting, via the secondary bidirectional transfer network, to the information transfer point a resending of corrupted transferred information.

The aforementioned objects can also be achieved by a method for transferring information from an information provider to an information consumer by means of a digital broadcasting system to a digital broadcasting receiver of the information consumer. The transfer is executed with support of a secondary bidirectional transfer network to thereby enable a secure information transfer when a demand to transfer information to the information consumer is originated by the information consumer. The method according to the invention comprises a number of steps. In a first step the information consumer establishes an initial contact with an information transfer point via the secondary bidirectional transfer network with a request for an information transfer from the information provider to the information consumer. The information transfer point can be part of the information provider, part of the digital broadcasting system, or a separate service. In a second step the information transfer point transfers a crypto key to the information consumer by means of the secondary bidirectional transfer network before, during or after transferring information over the digital broadcasting system. In a third step the information to be transferred is encoded either by the information provider or by the information transfer point. In a fourth step the information provider via the information transfer point, transfers the encoded information over the digital broadcasting system to the digital broadcasting receiver of the information consumer. And finally in a fifth step the transferred encoded information is decoded by means of the transferred crypto key either in the digital broadcasting receiver of the information consumer or by the information consumer.

Suitably the information transfer point determines when and with what channel the information transfer is to take place and by means of the secondary bidirectional transfer network notifies the information consumer of when and with what channel the information transfer is to take place.

The information transfer point can preferably confirm the availability or non-availability of the requested information to the information consumer via the secondary bidirectional transfer network or via the digital broadcasting system.

When a high reliability of the transfer of the information is necessary the method according to the invention further comprises the following steps. First transferring checksums or the like, of the information that has or will be transferred via the digital broadcasting system, via the secondary bidirectional transfer network to the information consumer. Secondly checking the transferred information if it is uncorrupted based on the transferred checksums or the like. Checking is performed in the digital broadcasting receiver of the information consumer or by the information consumer. Thirdly the digital broadcasting receiver of the information consumer or the information consumer requesting, via the secondary bidirectional transfer network, to the information transfer point a resending of corrupted transferred information.

By providing a method for transferring information safely from an information provider to an information consumer by using a digital broadcasting system and a secondary bidirectional transfer network, a plurality of advantages over prior art systems are obtained. The information needed by the information transfer point is transferred to it by means of a secondary bidirectional transfer network which can be a readily available telephone network such as GSM. A high security according to the invention is obtained by transferring crypto keys and the like directly to the information consumer by means of the secondary bidirectional transfer network which in that case preferably is a point to point transfer network. High reliability is obtained by using the secondary bidirectional transfer network as a back channel for requests for resending faulty blocks of data. Another advantage of the invention is the ability to be able to identify an information consumer either by the digital broadcasting receiver identity, the identity of the secondary bidirectional transfer network transceiver, another identifier which is hardware independant, or an arbitrary combination of the above.

### DESCRIPTION OF THE FIGURES

The invention will now be described in more detail for explanatory, and in no sense limiting, purposes, with reference to the following figures, in which
- Fig. 1: shows a block diagram of one embodiment of a system according to the invention,
- Fig. 2: shows a flow chart of a method to which the invention can be applied,
- Fig. 3: shows a flow chart of another method to which the invention can be applied,
- Fig. 4: shows a flow chart of how a high security and error tolerance is accomplished according to one method of the invention.

### DESCRIPTION OF PREFERRED EMBODIMENTS

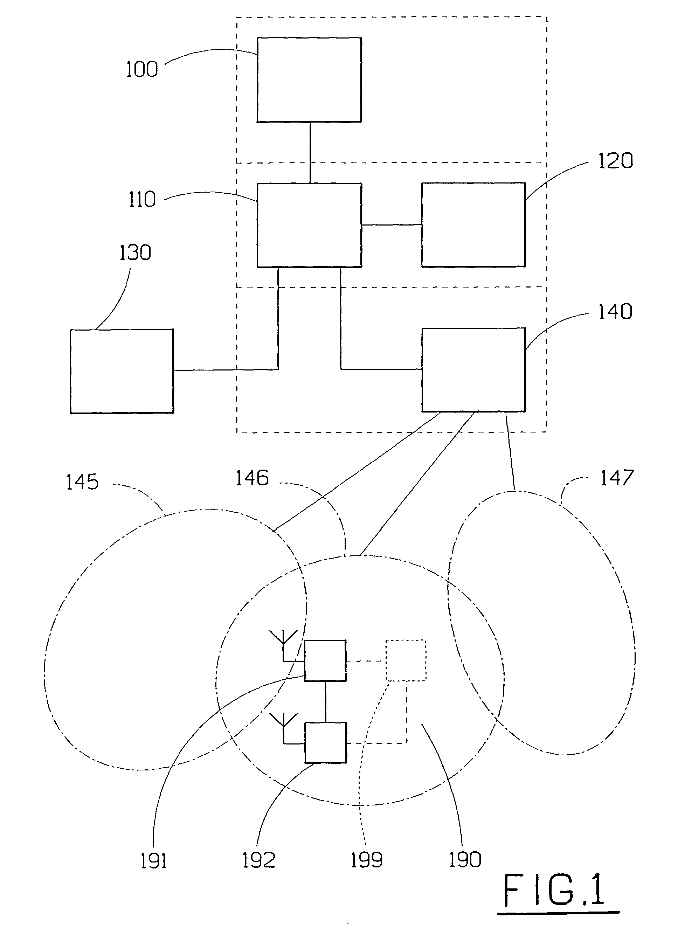

In order to clarify the system according to the invention, some examples of its use will now be described in connection with Figures 1 to 4.

Figure 1 shows a block diagram of one embodiment of a system according to the invention. As indicated in the figure and below certain parts can form smaller or larger groups. The information that is to be transferred to an information consumer / terminal 190 can be found at an information / content provider 100. The other parts that make up the system are an information transfer point / a service provider 110, an access information database 120, a digital broadcasting network / a network provider 140 with associated cells 145, 146, 147, a secondary bidirectional transfer network / an interaction network 130, an information consumer / terminal 190 with a digital broadcasting receiver 191 and a transceiver 192 for the secondary bidirectional transfer network 130 and optionally means 199 for handling encrypted transmission. The access information database 120 is used to identify the secondary network 130 and access in that network to an information consumer. The invention is not dependent on the exact physical closeness of the different parts, logically the information consumer 190 is preferably apart from the other parts 100, 110, 120, 130, 140 of the system. For example the information transfer point 110 might be part of the information provider 100, or form part with the access information database 120 and the digital broadcasting network / system 140 such as a DAB network, or be a completely independent service. As mentioned there are many possibilities, but they do not affect the invention.

Basically the invention uses the secondary bidirectional transfer network 130 to enable a secure transfer of information. It can be used with systems that locates the information consumer 190 and directs the information only to the whereabouts of the information consumer 190. The invention utilizes a broadcasting system 140 for transfer of information to the information consumer 190. A broadcasting system is very effective in transferring information to many receivers but not very safe. Sometimes a broadcasting system is referred to as a point to multi point transfer system. A customary manner to transfer information to a single receipient is to use a so called point to point transfer system. A common disadvantage with a point to point system is that it is very expensive per unit of transferred information. A very attractive advantage with using a digital broadcasting system such as a DAB system for transfer of information is its extremely large bandwidth, i.e. it can transfer large amounts of data / information in a very short space of time. By transferring crypto keys to consumers of information by means of the secondary bidirectional network a safe and cheap method of transferring information is obtained. Further by locating a receiver / consumer of information 190 in a broadcasting system 145, 146, 147 the transfer of information can be directed to that locality 146, enabling simultaneous use of the network by spacially separated receivers making the transfer of information very cost effective.

A digital broadcasting system such as a DAB system can be of a SFN (Single Frequency Network) nature, be of a more traditional radio broadcasting nature with different frequency regions / cells 145, 146, 147 or a combination of both where there can be a SFN covering a nation or large region and also several different DAB frequency regions within the same coverage area, each of which can be a small SFN system. It is possible to direct and send different information within a SFN as well as in the traditional cell structure. Sending different information in a SFN requires great care, but is possible. However, both methods require that the locality of the receiver to be known if transmission of information to a single information consumer 190 is to be possible at all.

The secondary bidirectional network 130 can thus also be used to transfer the information of the locality of the information consumer to the information transfer point 110. One method of aquiring the locality itself of the information consumer would be to use a GPS (Global Positioning System) and send the information to the information transfer point 110 via the secondary network 130. However, it could be seen as a disadvantage at times to have to include a GPS with the information consumer.

Another method of locating the information consumer 190 would be to use the information that a cell based secondary bidirectional transfer network 130, such as GSM, generates. Unfortunately that information is usually the propriety of the operator to that network and thus unavailable to users outside of that network. The use of that method would then be specific to a specific secondary network 130 which could be considered a disadvantage at times.

The specific transmitter identification information such as a TII that each transmitter in a DAB network sends is used to locate the information consumer 190. At least one TII is aquired and transferred to the information transfer point 110 via the secondary network 130. One is enough to at least roughly locate the information consumer 190 with its digital broadcasting receiver 191 and secondary network transceiver 192. Optionally more receivable TIIs are transferred and optionally together with their respective field strengths. This enables the information transfer point 110 to fairly exactly pinpoint the information consumer 190 and thereby determine the most efficient manner in which to transfer the information. Criteria that the information transfer point 110 can use could for example be direction of travel, free capacity in the different channels, the amount of information to transfer, what channels are receivable, urgency / priority of the request to transfer information, and so on.

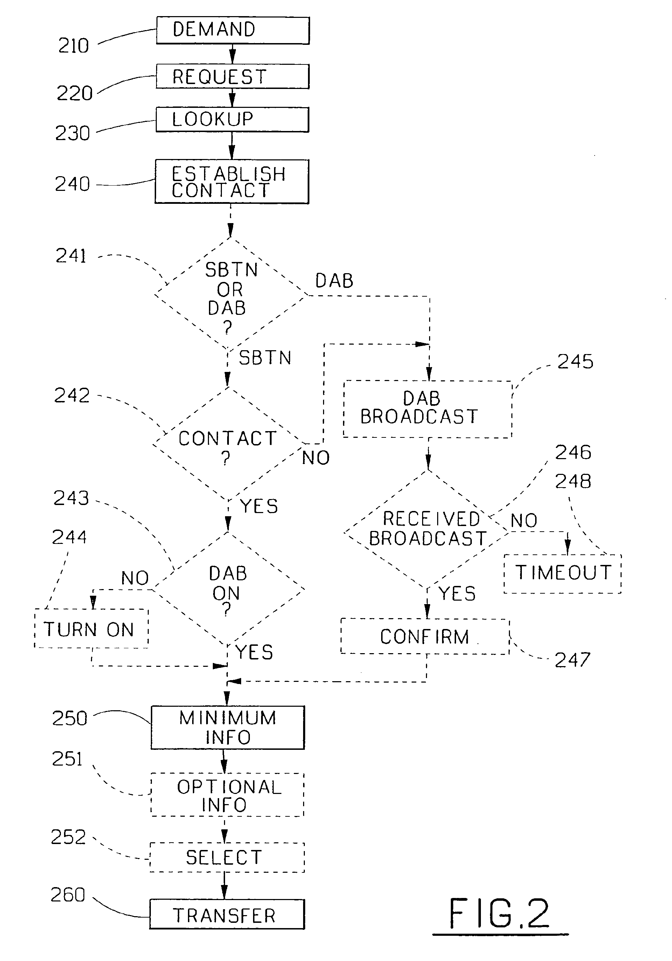

Figure 2 shows a flow chart of a method to which the invention can be applied utilizing, for example, a system according to figure 1. The method according to figure 2 describes when a demand for transferring information to an information consumer arises from an information provider, i.e. a push system. In a first step, a demand step 210, a demand to transfer information to an information consumer originates at an information provider. This demand is transferred as a request to an information transfer point in a request step 220. The information transfer point executes a lookup in a lookup step 230 to establish the known methods of establishing contact with the information consumer. Based on the lookup in an establish contact step 240, contact with the information consumer is established. The step of establishing contact 240 can optionally involve the following substeps. Substep SBTN or DAB ? 241 establishes if the initial contact with the information consumer is to be done via the secondary bidirectional transfer network (SBTN) or via the digital broadcasting network. This information is usually available and established in the lookup step 230. If the secondary network is to be used then a substep contact ? 242 determines if it is possible to establish contact with the information consumer. If it is possible to establish contact with the information consumer, then in substeps DAB on ? 243 and turn on 244 it is made sure that the digital broadcasting receiver, in this example a DAB receiver of the information consumer is turned on whereafter the procedure continues with step minimum info 250. If no contact was possible to establish in substep contact ? 242 due to, for example, the fact that the secondary network transceiver of the information consumer is turned off or the information transfer point has no or erroneous information about the secondary network of the information consumer, then one method to continue is to go to substep DAB broadcast 245. In the substep DAB broadcast 245 a general call is made via part or the complete digital broadcasting network, in this example a DAB network, to alert the information consumer that a demand to transfer information has arisen. If the general call is received by the information consumer in a substep received broadcast 246 then the information consumer should turn on its secondary network transceiver and confirm to the information transfer point in a substep confirm 247 that it has received the call and continues with step minimum info 250. On the other hand if the information transfer point does not receive a confirmation or any other contact with the information consumer within a predetermined space of time then in a substep timeout 248 the information provider is notified that no contact was possible to reach with the information consumer. After initial contact has been made with the information consumer then in the step minimum info 250 the information consumer transfers to the information transfer point via the secondary network transfer configuration information comprising at least one transmitter identification information (TII) that the digital broadcasting receiver of the information consumer can receive. Optionally in a substep optional info 251 the information consumer also provides the information transfer point with additional transfer configuration information such as additional receivable TIIs, field strengths of received transmitters, optional transfer routes etc. Also optionally in a substep select 252 the information transfer point determines / selects an optimal route / channel to send the information. Finally in a transfer step 260 the information is transferred from the information provider to the information consumer via the digital broadcasting network.

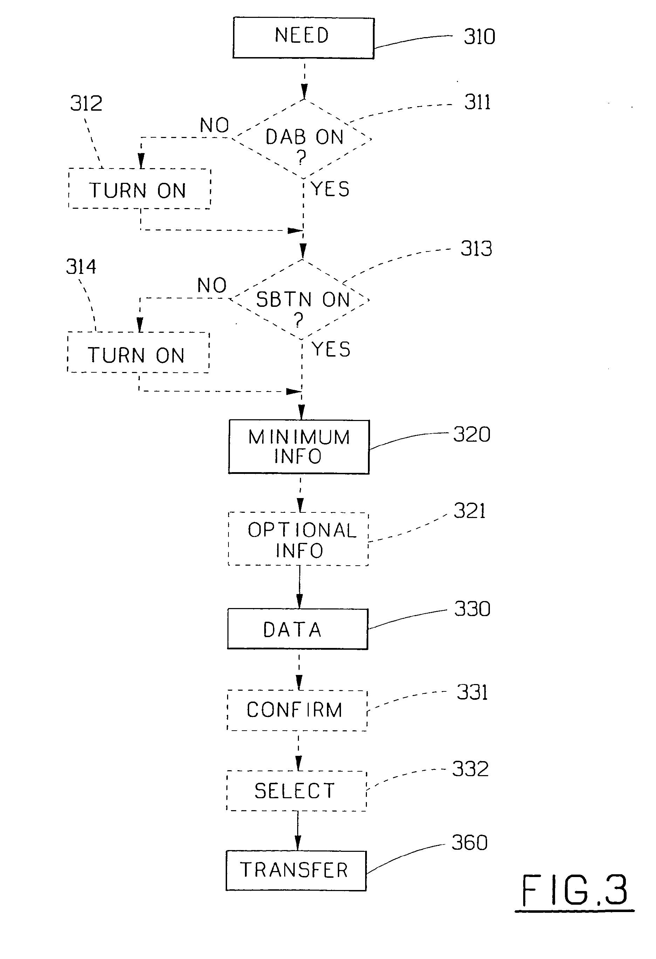

Figure 3 shows a flow chart of another method to which the invention can be applied utilizing, for example, a system according to figure 1. The method according to figure 3 describes when a demand for transferring information to an information consumer arises from the information consumer, i.e. a pull system. In a first step, a need step 210, a need for a transfer of information to the information consumer originates in the information consumer itself. In the optional substeps DAB on ? 311, turn on 312, SBTN on ? 313, and turn on 314 the information consumer makes sure that the necessary equipment is turned on. The information consumer then in the step minimum info 320 makes an initial contact with and also transfers to the information transfer point via the secondary network the request for information and transfer configuration information comprising at least one transmitter identification information (TII) that the digital broadcasting receiver, in this example a DAB receiver, of the information consumer can receive. Optionally in a substep optional info 321 the information consumer also provides the information transfer point with additional transfer configuration information such as additional receivable TIIs, field strengths of received transmitters, optional transfer routes etc. In a data step 330 the information transfer point retreives the requested information from an information provider. Optionally in a substep confirmation 331 the information transfer point confirms to the information consumer if the requested information is available or not. Also optionally in a substep select 332 the information transfer point determines / selects an optimal route / channel to send the information. Finally in a transfer step 360 the information is transferred from the information provider to the information consumer via the digital broadcasting network.

According to the invention increased security of the information that is to be transferred is of increased concern. The invention can be applied equally well to a push method, a method where a demand of information transfer to an information consumer arises from an information provider, and to a pull method, a method where a demand of information transfer to an information consumer arises from the information consumer. In a first step the information transfer point transfers a crypto key to the predetermined information consumer by means of the secondary bidirectional transfer network before, during or after transferring information over the digital broadcasting system. The information to be transferred is encoded either by the information provider or by the information transfer point. Decoding the transferred information is performed by means of the transferred crypto key either in the digital broadcasting receiver of the predetermined information consumer or by the predetermined information consumer.

Further when a high reliability of the transfer of the information is necessary the method according to the invention further comprises the following steps. First transferring checksums or the like, of the information that has or will be transferred via the digital broadcasting system, via the secondary bidirectional transfer network to the predetermined information consumer. Secondly checking the transferred information if it is uncorrupted based on the transferred checksums or the like. Checking is performed in the digital broadcasting receiver of the predetermined information consumer or by the predetermined information consumer. Thirdly the digital broadcasting receiver of the predetermined information consumer or the predetermined information consumer requesting, via the secondary bidirectional transfer network, to the information transfer point a resending of corrupted transferred information.

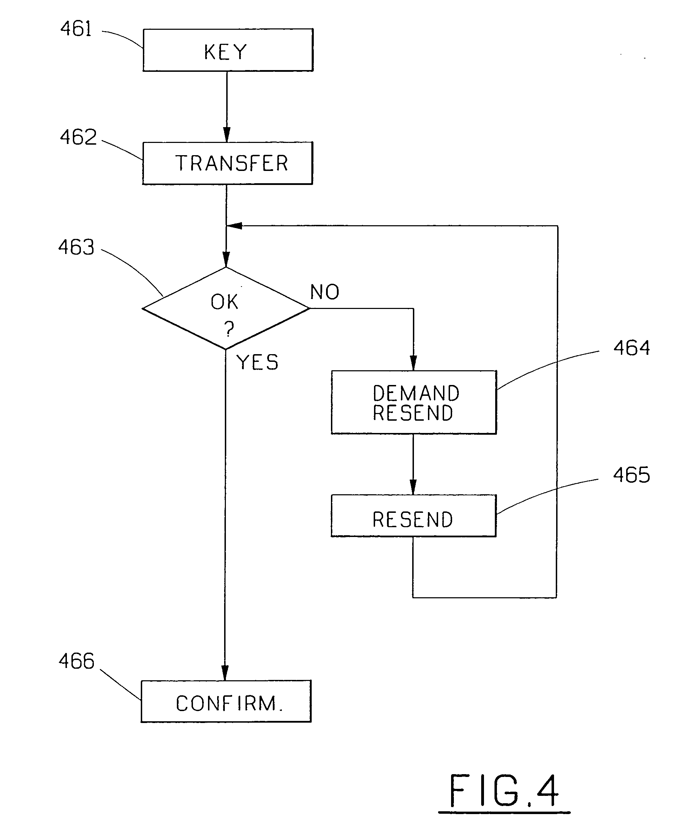

Figure 4 shows a flow chart of how a high security and error tolerance is accomplished according to one method of the invention which can for example be implemented in the methods of figure 2 and 3 as substeps to the transfer steps 260 and 360 respectively or be incorporated in a push or pull system as described by figures 2 and 3. In a first step key 461 a crypto key or the like is transferred to the information consumer via the secondary network. In a second step transfer 462 encoded information is transferred to the information consumer via a digital broadcasting system such as DAB. The information is decoded / decrypted and a test is made in a step OK ? 463 to determine if the information was received intact. If it was received without any errors then in a step confirmation 466 the information consumer confirms, via the secondary network, the reception of the information to the information transfer point. On the other hand if there is an error in the received information then the information consumer in a step demand resend 464 makes a demand, via the secondary network, to the information transfer point to resend the faulty information. The information is resent in a step resend 465 over the digital broadcasting network after which the procedure proceeds with step OK ? 363.

The present invention can be put into apparatus-form either as pure hardware, as pure software or as a combination of hardware and software. If the method according to the invention is realised in the form of software, it can be completely independent or it can be one part of a larger program. The software can suitably be located in a general purpose computer or in a dedicated computer.

As a summary, the invention can basically be described as a method which provide a secure manner of transferring information to an information consumer within a digital broadcasting network using a secondary bidirectional transfer network.

The invention is not limited to the embodiments described above but may be varied within the scope of the appended patent claims.

### FIG 1

- 100: requester / information provider
- 110: information transfer point
- 120: database
- 130: secondary bidirectional transfer network SBTN
- 140: digital broadcasting, DAB - Network provider
- 145: cell 1
- 146: cell 2
- 147: cell 3
- 190: user
- 191: digital broadcasting/DAB receiver
- 192: SBTN transceiver
- 199: crypto

### FIG 2

- 210: demand - for transfer of info to info consumer IC
- 220: request - to information transfer point ITP
- 230: lookup - of secondary bidir transfer netork SBTN
- 240: establish contact - with info IC based on lookup
- 241: SBTN or DAB ? - no SBTN given then DAB broadcast
- 242: contact ? - with / via SBTN
- 243: DAB on ?
- 244: turn on - if not
- 245: DAB broadcast
- 246: received broadcast ?
- 247: confirm - if received
- 248: timeout - and notify demander
- 250: minimum info - TII
- 251: optional info - field strength, xtra TII ....
- 252: select - method / DAB channel of transfer
- 260: transfer - info to information consumer

### FIG 3

- 310: need - of the information consumer
- 311: DAB on ?
- 312: turn on - if not
- 313: SBTN on ?
- 314: turn on - if not
- 320: minimum info - TII and request for information
- 321: optional info - field strength, what program..
- 330: data - is retrived int. or ext. to ITP
- 331: confirmation - to IC that data is available
- 332: select - method / DAB channel of transfer ...
- 360: transfer - info to IC

### FIG 4

- 461: key - to crypto sent via SBTN to DAB / IC
- 462: transfer - encoded blocks via DAB
- 463: OK ?
- 464: demand resend - of blocks that were not OK
- 465: resend - blocks
- 466: confirmation - to ITP that all OK

## Claims

1. A method for transferring information from an information provider to an information consumer by means of a digital broadcasting system to a digital broadcasting receiver of the information consumer and by means of support of a secondary bidirectional transfer network to thereby enable a secure information transfer when a demand to transfer information to the information consumer is originated by the information provider, **characterized in that** the method comprises the following steps:
- the information provider establishing contact with an information transfer point for requesting transfer of information to the information consumer;
- the information transfer point transferring a crypto key to the information consumer by means of the secondary bidirectional transfer network before, during or after transferring information over the digital broadcasting system;
- encoding the information to be transferred either by the information provider or by the information transfer point;
- transferring the encoded information over the digital broadcasting system to the digital broadcasting receiver of the information consumer;
- decoding by means of the transferred crypto key the transferred information either in the digital broadcasting receiver of the information consumer or by the information consumer.

2. The method according to claim 1, **characterized in that** the information transfer point determines when and with what channel the information transfer is to take place and by means of the secondary bidirectional transfer network notifies the information consumer of when and with what channel the information transfer is to take place.

3. The method according to claim 1 or 2, **characterized in that** in the step of transferring a crypto key to the information consumer via the secondary bidirectional transfer network, a broadcast over the digital broadcasting system is first performed to alert the information consumer to establish contact with the information transfer point.

4. The method according to claim 1 or 2, **characterized in that** if the step of transferring a crypto key to the information consumer via the secondary bidirectional transfer network cannot be concluded then a broadcast over the digital broadcasting system is performed to alert the information consumer to establish contact with the information transfer point.

5. The method according to claim 4, **characterized in that** if the information transfer point after a timeout has not been able to establish contact with the information consumer then the information provider is notified that the information consumer cannot be positively contacted.

6. The method according to any one of claims 1 to 5, **characterized in that** the method further comprises the following steps:
- transferring checksums or the like, of the information that has or will be transferred via the digital broadcasting system, via the secondary bidirectional transfer network to the information consumer;
- checking the transferred information if it is uncorrupted based on the transferred checksums or the like, checking in the digital broadcasting receiver of the information consumer or by the information consumer;
- the digital broadcasting receiver of the information consumer or the information consumer requesting, via the secondary bidirectional transfer network, to the information transfer point a resending of corrupted transferred information.

7. A method for transferring information from an information provider to an information consumer by means of a digital broadcasting system to a digital broadcasting receiver of the information consumer and by means of support of a secondary bidirectional transfer network to thereby enable a secure information transfer when a demand to transfer information to the information consumer is originated by the information consumer, **characterized in that** the method comprises the following steps:
- the information consumer establishing an initial contact with an information transfer point via the secondary bidirectional transfer network with a request for an information transfer from the information provider to the information consumer;
- the information transfer point transferring a crypto key to the information consumer by means of the secondary bidirectional transfer network before, during or after transferring information over the digital broadcasting system;
- encoding the information to be transferred either by the information provider or by the information transfer point;
- the information provider via the information transfer point, transferring the encoded information over the digital broadcasting system to the digital broadcasting receiver of the information consumer;
- decoding by means of the transferred crypto key the transferred encoded information either in the digital broadcasting receiver of the information consumer or by the information consumer.

8. The method according to claim 7, **characterized in that** the information transfer point determines when and with what channel the information transfer is to take place and by means of the secondary bidirectional transfer network notifies the information consumer of when and with what channel the information transfer is to take place.

9. The method according to any one of claims 7 to 8, **characterized in that** the information transfer point confirms the availability or non-availability of the requested information to the information consumer via the secondary bidirectional transfer network or via the digital broadcasting system.

10. The method according to any one of claims 7 to 9, **characterized in that** the method further comprises the following steps:
- transferring checksums or the like, of the information that has or will be transferred via the digital broadcasting system, via the secondary bidirectional transfer network to the information consumer;
- checking the transferred information if it is uncorrupted, based on the transferred checksums or the like, checking in the digital broadcasting receiver of the information consumer or by the information consumer;
- the digital broadcasting receiver of the information consumer or the information consumer requesting, via the secondary bidirectional transfer network, to the information transfer point a resending of corrupted transferred information.
